# EUROPEAN PATENT SPECIFICATION

(11) **EP 1 954 702 B1**
(45) Date of publication and mention of the grant of the patent: **28.09.2016**
(21) Application number: 06838055.9
(22) Date of filing: 20.11.2006
(51) Int. Cl.: C07F 7/18, C07F 7/08, C08G 77/04, C08G 77/02, C08G 77/20, C08L 83/06

(54) **RADIATION CURE SILICONE COMPOSITIONS**
STRAHLUNGSHÄRTBARE SILICONZUSAMMENSETZUNGEN
COMPOSITIONS DE SILICONE DURCISSABLES SOUS RADIATIONS

(30) Priority: 29.11.2005 US 740364 P
(43) Date of publication of application: 13.08.2008
(73) Proprietor: Henkel IP & Holding GmbH, 40589 Düsseldorf (DE)
(72) Inventor: CHU, Hsien-Kun, Wethersfield, Connecticut 06109 (US); LIM, Thomas Fay-Oy, Killingworth, Connecticut 06419 (US); LEVANDOSKI, Michael P., Bristol, Connecticut 06010 (US)
(74) Representative: Henkel IP Department
(86) International application number: PCT/US2006/044888
(87) International publication number: WO 2007/064514

(56) References cited:
- EP-A- 0 776 956
- WO-A1-2004/037868
- DE-A- 10 219 734
- US-A- 4 359 369
- US-A- 5 616 629

## Description

### BACKGROUND OF THE. INVENTION

### FIELD OF THE INVENTION

The present invention relates to compositions which include compounds that are end-capped with silanes containing radiation cure groups. In addition, the invention relates to a method for preparing such compounds. In particular, the radiation cure groups are attached to the silane via a methylene linkage.

### BRIEF DESCRIPTION OF RELATED TECHNOLOGY

Silicone rubber and liquid compositions exist in various forms as characterized by their differing cure chemistry, viscosity, polymer type and purity. They can be formulated into one-part or two-part systems, and a particular silicone composition can be engineered to be curable by more than one mechanism.

Moisture-curing mechanisms, heat-curing me chanisms, and photo-initiated curing mechanisms are among the means used to initiate cure, i.e., cross-linking of reactive silicones. These mechanisms are based on either condensation reactions, whereby moisture hydrolyzes certain groups on the silicone backbone, or addition reactions that can be initiated by a form of energy, such as electromagnetic radiation or heat. In certain silicone compositions, a combination of such cure mechanisms may be used to achieve the desired results.

For example, reactive polyorganosiloxanes can be cured by heat in the presence of a peroxide. Alternatively, these reactive siloxanes can also be cured by heat in the presence of silicone hydride-containing (--SiH) compounds and a metallic hydrosilylation catalyst, such as an organo-platinum catalyst.

Radiation curing silicones having methacryloxy functional groups are known. For instance, U.S. Pat. No. 4,675,346 (Lin) is directed to UV curable silicone compositions including at least 50% of a specific type of silicone resin, at least 10% of a fumed silica filler and a photoinitiator, and cured compositions thereof.

WO 2004/037868 A1 discloses fast moisture and photo/moisture curing silicone compositions and methods for the preparation thereof. The compositions are prepared from silanol and silane cappers. The cappers have an alpha-carbon bonded to the silicon atom as well as three hydrolyzable groups on the silicon. The alpha-carbon bonded to the silicon atom may be part of a acryloxy or methacryloxy functional group.

DE 102 19 734 A1 D2 discloses organosiloxane functionalized with specific (meth)acryloxyalkylsilane groups and methods for the preparation thereof. The organosiloxanes may comprise (meth)acryloxyalkylsilane groups within the polymer chain.

Other known radiation curing silicone compositions include those disclosed in Great Britain Patent No. 1,323,869 [composition for plate-making in printing consisting of an organopolysiloxane containing a (meth) acrylate functional group, a photosensitizer, and a solvent, which cures to a hard film]; U.S. Pat. Nos. 4,201,808 (Culley) and 4,348,454 (Eckberg) (compositions of an organopolysiloxane having an average of at least one acryloxy and/or methacryloxy group per molecule; a low molecular weight polyacrylyl crosslinking agent; and a photosensitizer, reported as being suitable for release coatings and curable upon exposure to UV radiation); and Great Britain Patent No. 2,039,287 (composition for protective coatings on paper prepared from the reaction of methacryloxypropyltrimethoxysilane and low molecular weight hydroxyl-terminated polyorganosiloxanes).

However, existing methods for preparing silicones capable of radiation cure can be expensive. Moreover, these processes can result in unwanted side products, such as acids and the like, which can be difficult to remove.

Accordingly, there is a need for a simple and inexpensive method for preparing silicones capable of radiation cure.

### SUMMARY OF THE INVENTION

In one aspect, the present invention provides compositions which include a compound of Formula (I):

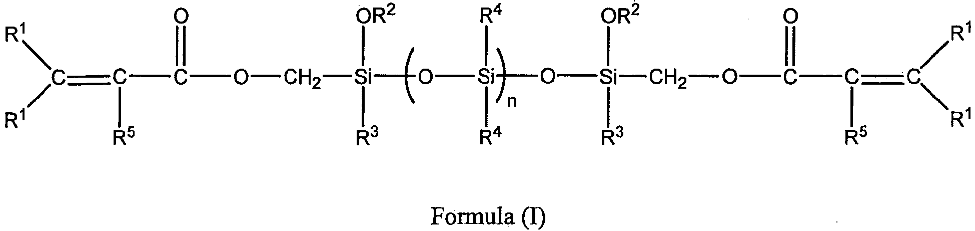

In another aspect, the present invention provides a method for making a composition, the method including the steps of mixing:
a) a siloxane of Formula (II): 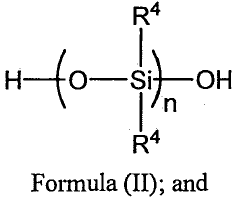
b) a compound of Formula (III) :

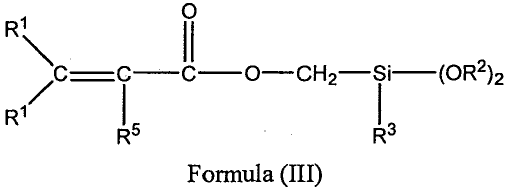

In still another aspect, the present invention provides the use of a composition, the composition including a compound of Formula (I): 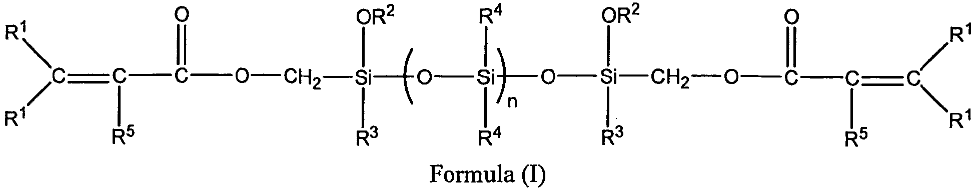 comprising the steps of
a) providing the composition;
b) applying the composition onto a substrate; and
c) exposing the composition to conditions appropriate to cure the composition.

In each of the above representations, the substituents, where they occur, are defined as follows:
R¹ in each occurrence may be the same or different and is selected from the group of H and C₁ to C₄ alkyl;
R² in each occurrence may be the same or different and is a C₁ to C₁₀ hydrocarbon radical;
R³ in each occurrence is methyl;
R⁴ in each occurrence may be the same or different and is a C₁ to C₁₀ hydrocarbon radical;
R⁵ in each occurrence may be the same or different and is selected from the group of H and C₁ to C₄ alkyl; and
n is 1 to 1,200.

### DETAILED DESCRIPTION OF THE INVENTION

The present invention provides radiation cure silicone compositions, and methods for their preparation

As used herein, the term "hydrocarbon radical" is intended to refer to a radical which is primarily composed of carbon and hydrogen atoms. Thus, the term encompasses aliphatic groups such as alkyl, alkenyl, and alkynyl groups; aromatic groups such as phenyl; and alicyclic groups such as cycloalkyl and cycloalkenyl. Hydrocarbon radicals of the invention may include heteroatoms to the extent that the heteroatoms do not detract from the hydrocarbon nature of the groups. Accordingly, hydrocarbon groups may include such functionally groups as ethers, alkoxides, carbonyls, esters, amino groups, cyano groups, sulfides, sulfates, sulfoxides, sulfones, and siilfones.

The hydrocarbon, alkyl, and phenyl radicals of the present invention may be optionally substituted. As used herein the term "optionally substituted" is intended to mean that one or more hydrogens on a group may be replaced with a corresponding number of substituents selected from alkyl, alkenyl, alkynyl, aryl, halo, haloalkyl, haloalkenyl, haloalkynyl, haloaryl, hydroxy, alkoxy, alkenyloxy, alkynyloxy, aryloxy, carboxy, benzyloxy, haloalkoxy, haloalkenyloxy, haloalkynyloxy, haloaryloxy, nitro, nitroalkyl, nitroalkenyl, nitroalkynyl, nitroaryl, nitroheterocyclyl, azido, amino, alkylamino, alkenylamino, alkynylamino, arylamino, benzylamino, acyl, alkenylacyl, alkynylacyl, arylacyl, acylamino, acyloxy, aldehydo, alkylsulphonyl, aryisulphonyl, alkylsulphonylamino, arylsulphonylamino, alkylsulphonyloxy, arylsulphonyloxy, heterocyclyl, heterocycloxy, helerocyclylamino, haloheterocyclyl, alkylsulphenyl, arylsulphenyl, carboalkoxy, carboaryloxy, mercapto, alkylthio, arylthio, acylthio and the like.

As used herein, the terms "halo" and "halogen" are intended to be synonymous, and both are intended to include chlorine, fluorine, bromine, and iodine.

As used herein, the terms "(meth)acryloxy" is intended to refer to both acryloxy and methacryloxy groups.

As used herein, there terms "silicone" and "siloxane" are intended to be synonymous and interchangeable with one another.

In one aspect, the present invention is directed to radiation cure compositions containing compounds of which Formula (I) is representative:

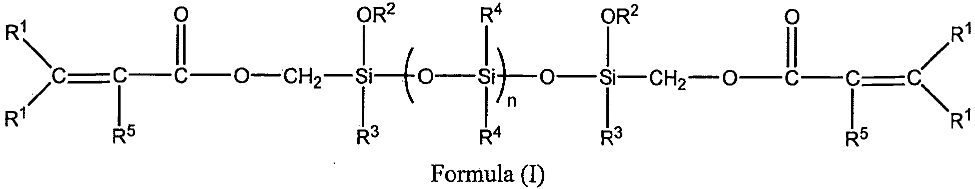

R¹ in each occurrence may be the same or different and is selected from the group of H and C₁ to C₄ alkyl. R¹ encompasses those substituents present on the exterior carbon of the double bond of the (meth)acryloxy group which end-caps the compositions of the invention. Desirably, R¹ is H.

R² in each occurrence may be the same or different, and is a C₁ to C₁₀ hydrocarbon radical. The inventive compositions may also undergo chain extension. Substituent R², in combination with the oxygen to which it is attached, forms a hydrolyzable group, which provides the compositions of the present invention with their ability to undergo chain extension. Chain extension typically occurs through exposure of the compositions of the invention to moisture. When exposed to moisture, a silane bearing a hydrolyzable group on one compound of Formula (I) may undergo condensation with such a silane on another compound of Formula (I). This generally results in the composition becoming more viscous. Thus, a further aspect of the invention relates to the chain-extended polymer formed by reaction of the compositions of the invention upon exposure to moisture. Suitable hydrolyzable groups include alkoxy groups such as methoxy, ethoxy, propoxy, and butoxy; acyloxy groups such acetoxy; aryloxy groups such as phenoxy; oximinoxy groups such as methylethylketoximinoxy; enoxy groups such as isopropenoxy; and alkoxyalkyl groups such as CH₃OCH₂CH₂-. Larger groups such as propoxy and butoxy are slower to react than smaller groups such as methoxy and ethoxy. The rate at which the compositions of the present invention undergo chain-extension can be tailored by choosing an appropriate group for substituent R². Advantageously, R² is methyl.

R³ in each occurrence is methyl.

R⁴ in each occurrence may be the same or different and is a C₁ to C₁₀ hydrocarbon radical. Advantageously, R⁴ is C₁ to C₄ alkyl. For most commercial applications, R⁴ will desirably be methyl, due to the wide availability of polydimethylsiloxane starting material which is advantageously used in the synthesis of the compositions of the invention. In another desirable aspect, R⁴ may also be phenyl.

R⁵ in each occurrence may be the same or different and is selected from the group of H and C₁ to C₄ alkyl. R⁵ encompasses the substituent on the interior of the double bond of the (meth)acryloxy group which end-caps the compositions of the invention. Desirably, R⁵ is H or methyl. More desirably, R⁵ is methyl.

The molecular weights of the silicone may vary and may be chosen to tailor the final product characteristics. The number of repeating units, n, can be varied to achieve specific molecular weights, viscosities, and other chemical or physical properties. Generally, n is an integer such that the viscosity is from 25 cps to 2,500,000 cps at 25° C, such as when n is from 1 to 1,200 and desirably from 10 to 1,000. Examples of useful molecular weights of the polyalkylsiloxanes include molecular weights of 500 to 50,000 atomic mass units. Advantageously, the average molecular weight of the silicone is 10,000 to 8,000 atomic mass units.

The acryloxy group to which substituents R¹ and R⁵ are attached provide the compositions of the invention with their ability to undergo radiation cure. Accordingly, the present invention also relates to the reaction product of radiation and compositions which include compounds of Formula (I).

A number of photoinitiators may be employed as part of the present invention. Any known free radical type photoinitiator which promotes crosslinking may be used in present invention. Photoinitiators enhance the rapidity of the curing process when the photocurable compositions as a whole are exposed to electromagnetic radiation.

Non-limiting examples of UV photoinitiators that are useful in the inventive compositions include benzoins, benzophenone, dialkoxy-benzophenones, Michler's ketone (4,4'-bis(dimethylamino)benzophenone) and diethoxyacetophenone, which is an example of a silicone soluble photoinitiator.

Examples of suitable photoinitiators for use herein include, but are not limited to, photoinitiators available commercially from Ciba Specialty Chemicals, under the "IRGACURE" and "DAROCUR" trade names, specifically "IRGACURE" 184 (1-hydroxycyclohexyl phenyl ketone), 907 (2-methyl-1-[4-(methylthio)phenyl]-2-morpholino propan-1-one), 369 (2-benzyl-2-N,N-dimethylamino-1-(4-morpholinophenyl)-1-butanone), 500 (the combination of 1-hydroxy cyclohexyl phenyl ketone and benzophenone), 651 (2,2-dimethoxy-2-phenyl acetophenone), 1700 (the combination of bis(2,6-dimethoxybenzoyl-2,4,4-trimethyl pentyl)phosphine oxide and 2-hydroxy-2-methyl-1-phenyl-propan-1-one), and 819 [bis(2,4,6-trimethyl benzoyl)phenyl phosphine oxide] and "DAROCUR" 1173 (2-hydroxy-2-methyl-1-phenyl-1-propan-1-one) and 4265 (the combination of 2,4,6-trimethylbenzoyldiphenyl-phosphine oxide and 2-hydroxy-2-methyl-1-phenyl-propan-1-one); and the visible light [blue] photoinitiators, dl-camphorquinone and "IRGACURE" 784DC. Of course, combinations of these materials may also be employed herein.

Other photoinitiators useful herein include alkyl pyruvates, such as methyl, ethyl, propyl, and butyl pyruvates, and aryl pyruvates, such as phenyl, benzyl, and appropriately substituted derivatives thereof. Photoinitiators particularly well-suited for use herein include ultraviolet photoinitiators, such as 2,2-dimethoxy-2-phenyl acetophenone (e.g., "IRGACURE" 651), and 2-hydroxy-2-methyl-1-phenyl-1-propane (e.g., "DAROCUR" 1173), bis(2,4,6-trimethyl benzoyl) phenyl phosphine oxide (e.g., "IRGACURE 819), and the ultraviolet/visible photoinitiator combination of bis(2,6-dimethoxybenzoyl-2,4,4-trimethylpentyl)phosphine oxide and 2-hydroxy-2-methyl-1-phenyl-propan-1-one (e.g., "IRGACURE" 1700), as well as the visible photoinitiator bis (.eta..sup.5 -2,4-cyclopentadien-1-yl)-bis[2,6difluoro-3-(1H-pyrrol-1-yl)phenyl]titanium (e.g., "IRGACURE" 784DC).

The amount of photoinitiator used in the composition will typically be in the range of between 0.1% to 10% of the composition, and desirably from 2% to 5% by weight of the composition. Depending on the characteristics of the particular photoinitiator, however, amounts outside of this range may be employed without departing from the invention so long as they perform the function of rapidly and efficiently initiating polymerization of the photocurable groups.

The radiation which cures the inventive compositions may include UV and/or visible light. For visible light radiation, light-emitting diode (LED) based light generation devices may be employed. Such devices include at least one LED coupled to a power supply, which device delivers a high light output to the compositions to be cured.

Examples of light sources that can provide both UV and visible light include arc lamps. Conventional arc lamps such as mercury short arc lamps may be employed. UV curing lamp assemblies, which may include arc lamps, such as those disclosed in U.S. Pat. Nos. 6,520,663 to Holmes et al. and 6,881,964 to Holmes, the contents of which are incorporated herein by reference in their entirety, may be used.

An example of a commercially available lamp assembly useful for UV and/or visible light curing is the "ZETA 7420" (available from Henkel Corporation, Rocky Hill, CT). The "Zeta 7420" includes a glass filter to reduce short and medium wavelength lamp emissions. The assembly can emit light in the visible blue and green region.

A variety of additional useful components may be included in the present inventive compositions. For example, condensable silanes may be added to facilitate chain-extension, and in certain cases can effectuate cross-linking. Such condensable silanes include alkoxy silanes, acetoxy silanes, enoxy silane, oximino silanes, amino silanes and combinations thereof. Other suitable silanes include vinyl trimethoxy silane, vinyltrimethoxysilane, vinyltriisopropenoxysilane, and alpha functionalized silanes. Accordingly, a further aspect of the invention relates to the cross-linked polymer formed by reaction of the compositions of the invention upon exposure to moisture. The condensable silanes may be present in amounts of 0.5% to 10% by weight of the composition. A more desirable range would be 0.5-5.0%.

Fillers optionally may be included in the compositions of the present invention. Generally, any suitable mineral, carbonaceous, glass, or ceramic filler may be used, including, but not limited to: fumed silica; clay; metal salts of carbonates; sulfates; phosphates; carbon black; metal oxides; titanium dioxide; ferric oxide; aluminum oxide; zinc oxide; quartz; zirconium silicate; gypsum; silicium nitride; boron nitride; zeolite; glass; plastic powder; and combinations thereof. The filler may be present in the composition in any suitable concentration in the curable silicone composition. Generally, concentrations of from 5% to 80 % by weight of the composition are sufficient. However, a more desirable range would be 20-60%. Desirably, fillers should not be added in quantities such that the transmission of the electromagnetic waves needed for radiation cure are unable to initiate polymerization.

Among the more desirable fillers are reinforcing silicas. The silica may be a fumed silica, which may be untreated (hydrophilic) or treated with an adjuvant so as to render it hydrophobic. The fumed silica should be present at a level of at least 5% by weight of the composition in order to obtain any substantial reinforcing effect. Although optimal silica levels vary depending on the characteristics of the particular silica, it has generally been observed that the thixotropic effects of the silica produce compositions of impractically high viscosity before maximum reinforcing effect is reached. Hydrophobic silicas tend to display lower thixotropic ratios and therefore greater amounts can be included in a composition of desired consistency. In choosing the silica level, therefore, desired reinforcement and practical viscosities must be balanced. A particularly desirable fumed silica is R8200 by Degussa®.

In some embodiments of the present invention, it may be desirable to incorporate a dry filler. For example, a moisture curable pre-mix composition may include the reactive polymer of Formula I and at least one dry filler. Such dry fillers generally have a water content of less than 0.5% by weight of the composition. Such compositions desirably are substantially free of added moisture, thereby preventing premature curing or thickening of the reactive polyorganosiloxane. The pre-mix compositions also may include additional reactive silanes, adhesion promoters or combinations thereof.

Adhesion promoters also may be included in the moisture curable compositions. An adhesion promoter may act to enhance the adhesive character of the moisture curable composition for a specific substrate (i.e., metal, glass, plastics, ceramic, and blends thereof). Any suitable adhesion promoter may be employed for such purpose, depending on the specific substrate elements employed in a given application. Various organosilane compounds, particularly aminofunctional alkoxysilanes, may be desired.

Suitable organosilane adhesion promoters include, for example, 3-aminopropyltriethoxysilane, 3-aminopropyltrimethoxysilane, 3-aminopropylmethyldiethoxysilane, 3-aminopropylmethyldimethoxysilane, methylaminopropyltrimethoxysilane, 1,3,5-tris(trimethylsilylpropyl)isocyanurate, 3-glycidoxypropyltrimethoxysilane, 3-glycidoxypropylethyldimethoxysilane, 2-glycidoxyethyltrimethoxysilane, 2-cyanoethyltrimethoxysilane, 3-cyanopropyltriethoxysilane, isocyanatopropyltriethoxysilane, isocyanatopropyltrimethoxysilane, and combinations thereof.

Adhesion promoters, when present, may be used in amounts of 0.1% to 10% by weight of the composition. Desirably, the adhesion promoter is present from 0.2% to 2.0% by weight of the composition.

The compositions also may include any number of optional additives, such as pigments or dyes, plasticizers, thixotropic agents, alcohol scavengers, stabilizers, anti-oxidants, flame retardants, UV-stabilizers, biocides, fungicides, thermal stabilizing agents, rheological additives, tackifiers, and the like or combinations thereof. These additives should be present in amounts suitable to effectuate their intended purpose.

The present invention also provides a method for preparing compositions which include a compound of Formula (I). One approach to preparing the compound of Formula (I) includes the steps of mixing:
a) a siloxane of Formula (II): 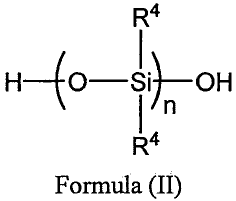
b) a compound of Formula (III): 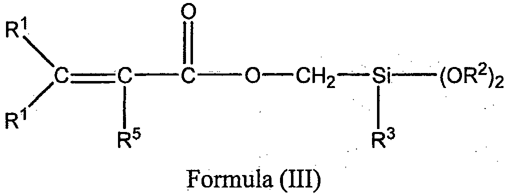
where R¹ R², R³, R⁴, R⁵, and n are as described hereinabove. By this method, the silanol of Formula (II) is endcapped with the compound of Formula (III) via a condensation reaction. Accordingly, the present invention also relates to compositions which include the reaction product obtained by this method.

In condensation reactions of silanols with silanes bearing hydrolyzable groups, the reactivity of the silanes is directly proportional to the number of hydrolyzable groups attached to the silicon, presumably due to the electron withdrawing capability of typical hydrolyzable groups such as alkoxy and acetoxy groups. The more hydrolyzable groups there are on a silane silicon, the more susceptible to nucleophilic substitution the silane is. For example, condensation of silanols with tetra- or triacetoxysilanes takes place instantaneously, but condensation with diacetoxy- or mönoacetoxysilanes is orders of magnitude slower. The facility with which the endcapping occurs in preparing compounds of Formula (I) is believed to be due to the presence of the methylene group linking the methacryloxy substituent with the silicon. The methylene group may allow for a pentacoordinated silane, in which electrons from a methacryloxy oxygen are coordinated to the silicon, as shown in the representation below:

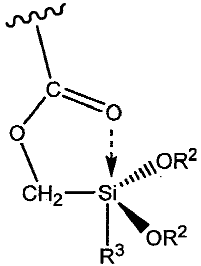

The coordination of the electrons to the silicon is believed to enhance the reactivity of the hydrolyzable groups on the silicon.

The endcapping reaction will desirably take place in the presence of a catalyst, which is typically produced by adding a basic component to the reaction mixture. Basic components such as organo-lithium compounds are particularly suitable for producing the catalyst used for the endcapping reaction. Examples of suitable organo-lithium compounds include, but are not limited to: methyl lithium; n-butyl lithium; sec-butyl lithium; t-butyl lithium; n-hexyl lithium; 2-ethylhexyl lithium; n-octyl lithium; phenyl lithium; vinyl lithium; lithium phenylacetylide; lithium (trimethylsilyl) acetylide; lithium dimethylamide; lithium diethylamide; lithium diisopropylamide; lithium dicyclohexylamide; lithium silanolate; lithium siloxanolate; and combinations thereof. Other catalysts known to those skilled in the art may be useful in forming the reactive polyorganosiloxanes of the present invention, but those formed from the addition of organo-lithium compounds are preferred because of the advantages associated therewith, as described in U.S. Patent Nos. 5,300,608, 5,498,642, 5,516,812 and 5,663,269 (assigned to Henkel Corporation), which are incorporated herein by reference in their entirety.

The reaction may optionally take place in the presence of stabilizers such as diethylhydroxylamine.

Also provided by the present invention is the use of compositions which include a compound of Formula (I): 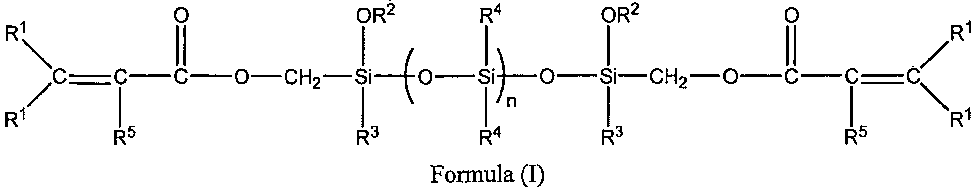 including the steps of:
a) providing the composition;
b) applying the composition onto a substrate; and
c) exposing the composition to conditions appropriate to cure the composition,
where the compositions which include a compound of Formula (I) are as discussed hereinabove.

The inventive compositions may be used, for example, to seal or bond substrates, such as, but not limited to, gaskets. In gasketing applications, the moisture curable composition may be applied to one of the substrates which will form part of the gasket, cured or at least partially cured, and then joined to a second substrate to form a gasket assembly. Such gasketing applications include, for example, form-in-place gaskets. For instance, the compositions may be applied to a substrate and subjected to curing conditions. The compositions may be used to seal together substrates by applying the composition to at least one of two substrate surfaces, mating the substrate surfaces in an abutting relationship to form an assembly, and exposing the composition to moisture to effect cure. The substrates should be maintained in the abutting relationship for a time sufficient to effect cure.

### EXAMPLES

### Synthetic Example 1

200 g of a silanol fluid with 2200 cps was mixed with methacryloxymethylmethyldimethoxysilane (7.12g) in a 300 mL 3-neck round bottom flask. De-ioriized water (0.216 g) was introduced via a syringe. Butyllithium (0.10mL of 1:6M in hexane solution) was introduced via a syringe. The mixture was heated with vigorous stirring to 50°C. Diethylhydroxylamine (0.11 g) was then added to the stirring mixture via a syringe. The mixture was then heated to 70°C with vacuum stripping for one hour to remove the methanol byproduct.

The viscosity of the resulting fluid was found to be 4,300 cps.

A 40 g sample of this fluid was mixed with 0.60 g of diethoxyacetophenone. The mixture was then placed within two glass plates with a 75 mm gap and irradiated for one minute per side with a 70 mW/cm² UV light generated by a medium pressure mercury lamp. The formation cured to a clear rubber with a hardness measured by Shore OO durometer of 65.

### Synthetic Example 2

150 g of a silanol fluid with 2000 cps was mixed with 3.00 g of methacryloxymethylmethyldimethoxysilane in a 300 mL 3-neck round bottom flask. Butyllithium (0.10 mL in 1.6M in hexane solution) was introduced via a syringe. The mixture was heated with vigorous stirring at 60°C for 2 hours followed by vacuum stripping at 60°C for 1 hour to remove the methanol byproduct.

The viscosity of the resulting fluid was found to be 6,000 cps.

A 40 g sample of this fluid was mixed with 0.60 g of diethoxyacetophenone. The mixture was then placed within two glass plates with a 75 mm gap and irradiated for one minute per side with a 70 mW/cm2 UV light generated by a medium pressure mercury lamp. The formulation cured to a clear rubber with a hardness measured by Shore OO of 65.

### Synthetic Example 3

160 g of a silanol fluid with 5000 cps was mixed with 2.04 g of methacryloxymethylmethyldimethoxysilane in a 300 mL 3-neck round bottom flask. Butyllithium (0.10 mL of 1.6 M in hexane solution) was introduced via a syringe. The mixture was heated with vigorous stirring at 60°C for 2 hours followed by vacuum stripping at 60°C for 1 hour.

The viscosity of the resulting fluid was found to be 16,400 cps.

A 40 g sample of this fluid was mixed with 0.60 g of diethoxyacetophenone. The mixture was then placed within two glass plates with a 75 mm gap and irradiated for one minute per side with a 70 mW/cm2 light generated by a medium pressure mercury lamp. The formulation cured to a clear rubber with a hardness measured by Shore OO durometer of 52.

## Claims

1. A composition comprising a compound of Formula (I): 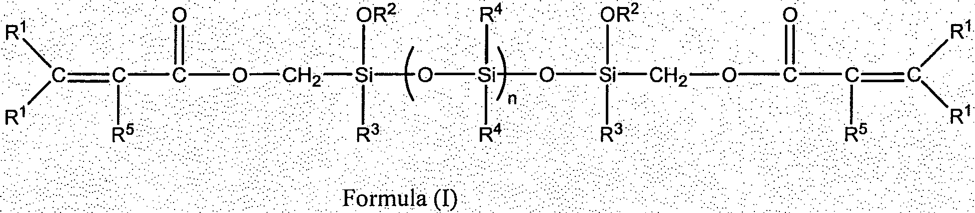 wherein
R¹ in each occurrence may be the same or different and is a member selected from the group consisting of H and C₁ to C₄ alkyl;
R² in each occurrence may be the same or different and is a C₁ to C₁₀ hydrocarbon radical;
R³ in each occurrence is methyl;
R⁴ in each occurrence may be the same or different and is a C₁ to C₁₀ hydrocarbon radical;
R⁵ in each occurrence may be the same or different and is a member selected from the group consisting of H and C₁ to C₄ alkyl; and
n is 1 to 1,200.

2. The composition of claim 1, wherein
R² is a member selected from the group consisting of C₁ to C₄ alkyl and phenyl;
R³ is methyl; and
R⁴ is a member selected from the group consisting of methyl and phenyl.

3. The composition of claim lor 2, further comprising a filler.

4. The composition of claim 1 to 3, further comprising a radiation cure catalyst.

5. The reaction product of the composition of claim 4 upon exposure to radiation.

6. A method for making a composition according to claim 1 or 2, the method comprising the steps of mixing:
a) a siloxane of Formula(II): 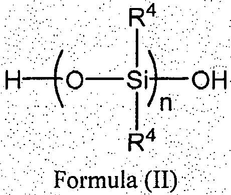 wherein
R4 in each occurrence may be the same or different and is a C₁ to C₁₀ hydrocarbon radical; and
n is 1 to 1,200; and
b) a compound of Formula (III): 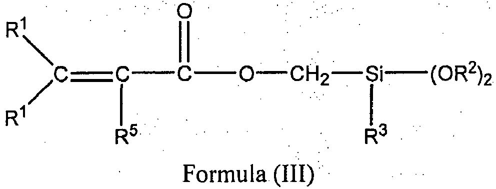 wherein
R¹ in each occurrence may be the same or different and is a member selected from the group consisting of H and C₁ to C₄ alkyl;
R² in each occurrence may be the same or different and is a C₁ to C₁₀ hydrocarbon radical;
R³ in each occurrence is methyl; and
R⁵ in each occurrence may be the same or different and is a member selected from the group consisting of H and C₁ to C₄ alkyl.

7. The method of claim 6, wherein the mixing occurs in the presence of a basic component.

8. Use of a composition comprising a compound of Formula (I): 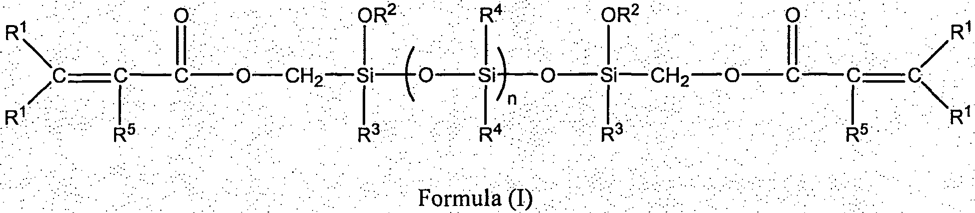 wherein
R¹ in each occurrence may be the same or different and is a member selected from the group consisting of H and C₁ to C₄ alkyl;
R² in each occurrence may be the same or different and is a C₁ to C₁₀ hydrocarbon radical;
R³ in each occurrence is methyl;
R⁴ in each occurrence may be the same or different and is a C₁ to C₁₀ hydrocarbon radical;
R⁵ in each occurrence may be the same or different and is a member selected from the group consisting of H and C₁ to C₄ alkyl; and
n is 1 to 1,200,
comprising the steps of:
a) providing the composition;
b) applying the composition onto a substrate; and
c) exposing the composition to conditions appropriate to cure the composition.

## Patentansprüche

1. Zusammensetzung, eine Verbindung mit der Formel (I) umfassend: 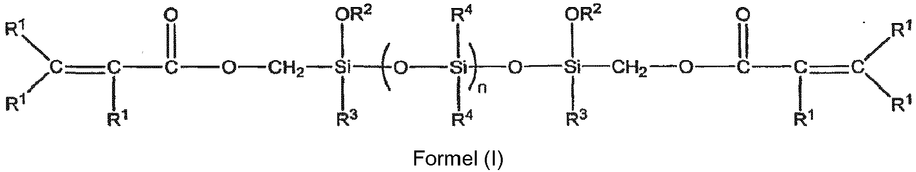 wobei
R¹ bei jedem Auftreten gleich oder verschieden sein kann und ein Element ist, ausgewählt aus der Gruppe bestehend aus H und C₁- bis C₄-Alkyl;
R² bei jedem Auftreten gleich oder verschieden sein kann und ein C₁- bis C₁₀-Kohlenwasserstoffrest ist;
R³ bei jedem Auftreten Methyl ist;
R⁴ bei jedem Auftreten gleich oder verschieden sein kann und ein C₁- bis C₁₀-Kohlenwasserstoffrest ist;
R⁵ bei jedem Auftreten gleich oder verschieden sein kann und ein Element ist, ausgewählt aus der Gruppe bestehend aus H und C₁- bis C₄-Alkyl; und
n 1 bis 1.200 ist.

2. Zusammensetzung nach Anspruch 1, wobei
R² ein Element ist, ausgewählt aus der Gruppe bestehend aus C₁- bis C₄-Alkyl und Phenyl;
R³ Methyl ist; und
R⁴ ein Element ist, ausgewählt aus der Gruppe bestehend aus Methyl und Phenyl.

3. Zusammensetzung nach Anspruch 1 oder 2, ferner einen Füllstoff umfassend.

4. Zusammensetzung nach Anspruch 1 bis 3, ferner einen Strahlungshärtungskatalysator umfassend.

5. Umsetzungsprodukt der Zusammensetzung nach Anspruch 4 bei Strahlungsbelastung.

6. Verfahren zum Herstellen einer Zusammensetzung nach Anspruch 1 oder 2, wobei das Verfahren die Schritte des Mischens des Folgenden umfasst:
a) eines Siloxans mit der Formel (II): 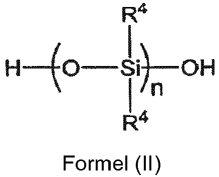 wobei
R⁴ bei jedem Auftreten gleich oder verschieden sein kann und ein C₁- bis C₁₀-Kohlenwasserstoffrest ist; und
n 1 bis 1.200 ist; und
b) einer Verbindung mit der Formel (III): 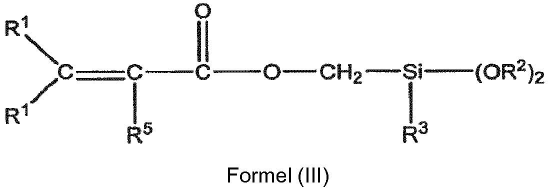 wobei
R¹ bei jedem Auftreten gleich oder verschieden sein kann und ein Element ist, ausgewählt aus der Gruppe bestehend aus H und C₁- bis C₄-Alkyl;
R² bei jedem Auftreten gleich oder verschieden sein kann und ein C₁- bis C₁₀-Kohlenwasserstoffrest ist;
R³ bei jedem Auftreten Methyl ist; und
R⁵ bei jedem Auftreten gleich oder verschieden sein kann und ein Element ist, ausgewählt aus der Gruppe bestehend aus H und C₁- bis C₄-Alkyl.

7. Verfahren nach Anspruch 6, wobei das Mischen in der Gegenwart einer Basiskomponente erfolgt.

8. Verwendung einer Zusammensetzung, eine Verbindung mit der Formel (I) umfassend: 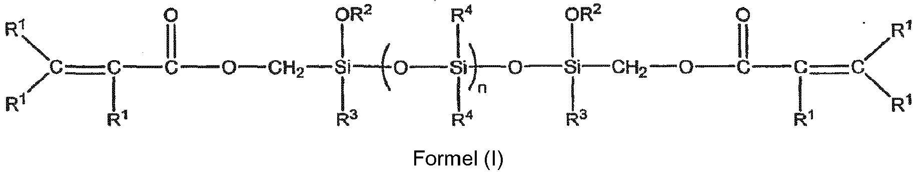 wobei
R¹ bei jedem Auftreten gleich oder verschieden sein kann und ein Element ist, ausgewählt aus der Gruppe bestehend aus H und C₁- bis C₄-Alkyl;
R² bei jedem Auftreten gleich oder verschieden sein kann und ein C₁- bis C₁₀-Kohlenwasserstoffrest ist;
R³ bei jedem Auftreten Methyl ist;
R⁴ bei jedem Auftreten gleich oder verschieden sein kann und ein C₁- bis C₁₀-Kohlenwasserstoffrest ist;
R⁵ bei jedem Auftreten gleich oder verschieden sein kann und ein Element ist, ausgewählt aus der Gruppe bestehend aus H und C₁- bis C₄-Alkyl; und
n 1 bis 1.200 ist,
die folgenden Schritte umfassend:
a) Bereitstellen der Zusammensetzung;
b) Auftragen der Zusammensetzung auf ein Substrat; und
c) Aussetzen der Zusammensetzung geeigneten Bedingungen, um die Zusammensetzung zu härten.

## Revendications

1. Composition comprenant un composé de la formule (I): 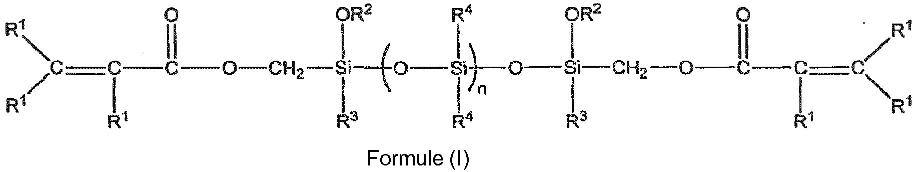 dans laquelle
les R¹ peuvent être, à chaque occurrence, identiques ou différents et sont un élément choisi dans le groupe constitué par H et alkyle en C₁ à C₄ ;
les R² peuvent être, à chaque occurrence, identiques ou différents et représentent chacun un radical hydrocarboné en C₁ à C₁₀ ;
les R³ sont, à chaque occurrence, un méthyle ;
les R⁴ peuvent être, à chaque occurrence, identiques ou différents et représentent chacun un radical hydrocarboné en C₁ à C₁₀ ; et
les R⁵ peuvent être, à chaque occurrence, identiques ou différents et sont un élément choisi dans le groupe constitué par H et alkyle en C₁ à C₄ ; et
n vaut 1 à 1200.

2. Composition selon la revendication 1, dans laquelle
R² est un élément choisi dans le groupe constitué par phényle et un alkyle en C₁ à C₄ ;
R³ est méthyle ; et
R⁴ est un élément choisi dans le groupe constitué par méthyle et phényle.

3. Composition selon la revendication 1 ou 2, comprenant en outre une charge.

4. Composition selon la revendication 1 à 3, comprenant en outre un catalyseur de durcissement par rayonnement.

5. Produit de réaction de la composition selon la revendication 4 lors d'une exposition à des rayonnements.

6. Procédé de fabrication d'une composition selon la revendication 1 ou 2, le procédé comprenant les étapes consistant à mélanger :
a) un siloxane de la formule (II) : 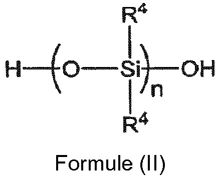 dans laquelle
les R⁴ peuvent être, à chaque occurrence, identiques ou différents et sont chacun un radical hydrocarboné en C₁ à C₁₀ ; et
n vaut 1 à 1200 ; et
b) un composé de la formule (III) : 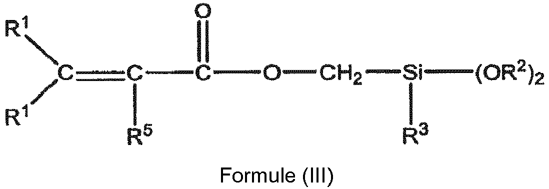 dans laquelle
les R¹ peuvent être, à chaque occurrence, identiques ou différents et sont chacun un élément choisi dans le groupe constitué par H et alkyle en C₁ à C₄ ;
les R² peuvent être, à chaque occurrence, identiques ou différents et sont chacun un radical hydrocarboné en C₁ à C₁₀ ;
R³ est, à chaque occurrence, méthyle ; et
les R⁵ peuvent être, à chaque occurrence, identiques ou différents et sont un élément choisi dans le groupe constitué par H et alkyle en C₁ à C₄.

7. Procédé selon la revendication 6, dans lequel le mélange est effectué en présence d'un composant basique.

8. Utilisation d'une Composition comprenant le composant de la formule (I) : 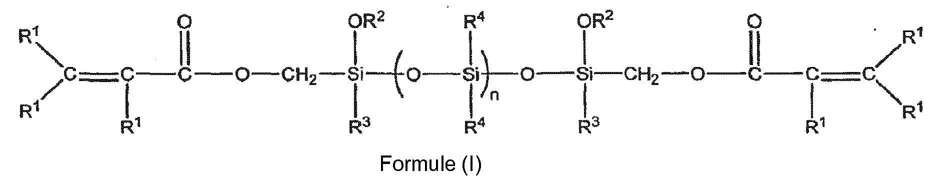 dans laquelle
les R¹ peuvent être, à chaque occurrence, identiques ou différents et sont un élément choisi dans le groupe constitué par H et alkyle en C₁ à C₄ ;
les R² peuvent être, à chaque occurrence, identiques ou différents et représentent chacun un radical hydrocarboné en C₁ à C₁₀ ;
les R³ sont, à chaque occurrence, un méthyle ;
les R⁴ peuvent être, à chaque occurrence, identiques ou différents et représentent chacun un radical hydrocarboné en C₁ à C₁₀ ; et
les R⁵ peuvent être, à chaque occurrence, identiques ou différents et sont un élément choisi dans le groupe constitué par H et alkyle en C₁ à C₄ ; et
n vaut 1 à 1200,
comprenant les étapes consistant à :
a) produire la composition ;
b) appliquer la composition sur un substrat ; et
c) exposer la composition à des conditions appropriées pour durcir la composition.
